# EUROPEAN PATENT APPLICATION

(11) **EP 4 407 747 A1**
(43) Date of publication of application: **31.07.2024**
(21) Application number: 22879937.5
(22) Date of filing: 28.07.2022
(51) Int. Cl.: H01M 10/54

(54) **METHOD FOR PREPARING ACTIVE NEGATIVE ELECTRODE MATERIAL BY RECYCLING BATTERY POWDER LEACHING RESIDUES**

(30) Priority: 13.10.2021 CN 202111192752
(71) Applicant: Guangdong Brunp Recycling Technology Co., Ltd, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: YU, Haijun, Foshan, Guangdong 528137 (CN); XIE, Yinghao, Foshan, Guangdong 528137 (CN); LI, Aixia, Foshan, Guangdong 528137 (CN); ZHANG, Xuemei, Foshan, Guangdong 528137 (CN); LI, Changdong, Foshan, Guangdong 528137 (CN)
(74) Representative: Primiceri, Maria Vittoria
(86) International application number: PCT/CN2022/108663
(87) International publication number: WO 2023/060990

(57) **Abstract**

Disclosed in the present invention is a method for preparing an active negative electrode material by recycling battery powder leaching residues, comprising: soaking the battery powder leaching residues in a first organic solvent to remove organic impurities; performing solid-liquid separation to obtain treated residues; after performing high-temperature treatment on the treated residues under an oxygen-isolated condition, soaking a product in a mixed solution of ferric iron salt and acid, then performing alkaline cleaning, performing carbonylation reaction with carbon monoxide, purifying by means of a second organic solvent, and performing solid-liquid separation to obtain graphite powder; and performing pre-lithiation on the graphite powder to obtain the active negative electrode material. According to the present invention, a series of impurity removal and activation are performed on the leaching residues generated by leaching of crushed battery powder, the active negative electrode material is finally prepared, and the problems of resource waste and low disassembly efficiency during the independent collection of a negative electrode current collector are avoided.

## Description

### TECHNICAL FIELD

The present disclosure belongs to the technical field of lithium battery recycling, and specifically relates to a method for preparing an active anode material by recycling a leaching residue of battery powder.

### BACKGROUND

At present, lithium-ion batteries (LIBs) are booming in emerging fields such as new energy vehicles and large-scale industrial energy storage systems. According to estimations, a quantity of scrapped traction batteries used in new energy vehicles will reach 1.16 million tons by 2023. However, scrapped lithium batteries include a large amount of rare and precious metals such as cobalt, nickel, manganese, and lithium and organic matters. Therefore, if not effectively recycled, the scrapped lithium batteries will not only pollute the environment, but also result in a waste of resources. At present, there are many studies on the recovery of cathode materials of scrapped lithium batteries, and more attention is paid to the separation and purification of lithium cobalt oxide (LCO) and ternary materials.

In recent years, recycling methods of lithium batteries mainly include pyrometallurgy and hydrometallurgy. In pyrometallurgy, metals or metal oxides in electrodes are extracted directly through high-temperature treatment, which involves a simple process, but leads to a low purity of a recovered material. An electrolytic solution, a binder, and other organic matters in a scrapped battery will cause the generation of harmful gases due to high-temperature reaction, and thus a supporting facility needs to be installed for secondary treatment of waste gas. In addition, a graphite anode of a battery is directly burned and scrapped due to high temperature, resulting in a waste of resources. Hydrometallurgy has the advantages of low pollution and easy control, and thus a large number of studies are concentrated on hydrometallurgy. A general process of hydrometallurgy includes: leaching out valuable metals, conducting fractional precipitation according to different properties of different metals, and conducting further purification to obtain a final product. Therefore, the selection of an efficient and low-cost leaching method is very important for the recovery of valuable metals in lithium batteries.

However, in hydro metallurgy, a housing of a battery is first disassembled, then the battery is shredded and sieved to obtain an electrode material, and valuable metals in the electrode material are leached out in an acid or a biological solution and then separated to obtain the corresponding salt or oxide of each metal. After the leaching is completed, a leaching residue produced is discarded as hazardous waste due to heavy metal impurities, and thus the graphite anode is not recycled.

### SUMMARY

The present disclosure is intended to solve at least one of the technical problems existing in the prior art. In view of this, the present disclosure provides a method for preparing an active anode material by recycling a leaching residue of battery powder.

According to one aspect of the present disclosure, a method for preparing an active anode material by recycling a leaching residue of battery powder is provided, including the following steps:
S1: soaking the leaching residue of battery powder in a first organic solvent to remove organic impurities, and conducting solid-liquid separation (SLS) to obtain a treated residue;
S2: subjecting the treated residue to high-temperature treatment under an oxygen-isolated condition, soaking a resulting residue subjected to high-temperature treatment in a mixed solution of a ferric salt and an acid, followed by alkali washing to obtain a residue subjected to alkali washing, and subjecting the residue subjected to alkali washing to a carbonylation reaction with carbon monoxide and then purification with a second organic solvent; and conducting SLS to obtain a graphite powder; and
S3: subjecting the graphite powder to pre-lithiation to obtain the active anode material.

In some embodiments of the present disclosure, in step S1, the first organic solvent may be at least one selected from the group consisting of N-methyl pyrrolidone (NMP), *N,N*- dimethylacetamide (DMAC), propylene carbonate (PC), 1,3-dioxolane, dimethyl carbonate (DMC), and ethyl methyl carbonate (EMC).

In some embodiments of the present disclosure, in step S2, the high-temperature treatment may be conducted at 300°C to 600 °C for 0.5 h to 2.0 h.

In some embodiments of the present disclosure, in step S2, the mixed solution may be a mixed solution of ferric sulfate and sulfuric acid.

In some embodiments of the present disclosure, in step S2, the mixed solution may have a concentration of ferric ions of 0.1 mol/L to 0.5 mol/L and a concentration of hydrogen ions of 0.1 mol/L to 4.0 mol/L; and preferably, a ratio of a mass of the treated residue to a volume of the mixed solution of a ferric salt and an acid (solid-to-liquid ratio) may be 1 g: (1-5) mL.

In some embodiments of the present disclosure, in step S2, the soaking may be conducted for 1.0 h to 4.0 h.

In some embodiments of the present disclosure, in step S2, the alkali washing may be conducted with a sodium hydroxide solution having a concentration of 0.5 mol/L to 2.0 mol/L at a temperature of 45 °C to 80 °C.

In some embodiments of the present disclosure, after the alkali washing, the step S2 may further include water washing, and the water washing may be conducted at 50 °C to 90 °C.

In some embodiments of the present disclosure, in step S2, the carbonylation reaction may be conducted in two stages. Wherein, a first-stage carbonylation may be conducted at a temperature of 190 °C to 210 °C and a pressure of no less than 20 MPa, and preferably, the first-stage carbonylation may be conducted for 0.5 h to 1.0 h; and a second-stage carbonylation may be conducted at a temperature of 38 °C to 93 °C and a pressure of no less than 0.1 MPa, and preferably, the second-stage carbonylation may be conducted for 0.5 h to 1.0 h.

In some embodiments of the present disclosure, in step S2, the second organic solvent may be at least one selected from the group consisting of benzene, acetone, diethyl ether, tetrachloronaphthalene (TCN), ethanol, trichloromethane (TCM), and carbon tetrachloride (CTC).

In some embodiments of the present disclosure, in step S3, the pre-lithiation may include: mixing the graphite powder with a lithium powder and NMP, and heating and stirring a resulting mixture; and subjecting the mixture to a solid-liquid separation to obtain a filter residue, and drying the filter residue to obtain the active anode material.

In some embodiments of the present disclosure, in the pre-lithiation of step S3, the heating may be conducted at 70 °C to 80 °C, and the stirring may be conducted for 1.0 h to 4.0 h.

According to a preferred embodiment of the present disclosure, the present disclosure at least has the following beneficial effects.

In the present disclosure, a leaching residue produced from leaching of a shredded battery powder is subjected to a series of treatments of impurity removal and activation to finally obtain the active anode material, which avoids the waste of resources and the low disassembly efficiency in separate collection of negative current collectors. An organic solvent with high dissolvability is used to dissolve the leaching residue of battery powder to remove residual electrolytic solution, binder, and other organic impurities; high-temperature treatment is conducted under an oxygen-isolated condition to further decompose the residual electrolytic solution and binder and reduce metal impurities into elemental metals, during which carbon absorbs oxygen in some metal oxides and shows some activity to be ready for the subsequent pre-lithiation; ferric ions with a stronger oxidation potential than hydrogen ions are used to dissolve the elemental metals; washing is conducted with a hot alkali liquor to remove sulfate ions through the replacement of hydroxide ions, that is, the hydroxide ions are subjected to ion exchange with the sulfate ions adsorbed inside the particles/in surface pores of the particles, such as to reduce a sulfur impurity content in a product; washing is conducted with pure water to remove introduced sodium ions; carbonylation is conducted to obtain a graphite powder, where residual metal reacts with carbon monoxide to form metal carbonyl that is easily soluble in an organic solvent, which further removes the residual metal ions; and the graphite powder is activated through pre-lithiation to obtain the active anode material. The present disclosure can be widely used in the recycling of scrapped ternary lithium batteries, especially in the recycling of anode materials of ternary lithium batteries.

### BRIEF DESCRIPTION OF DRAWINGS

The present disclosure is further described below with reference to accompanying drawings and examples.

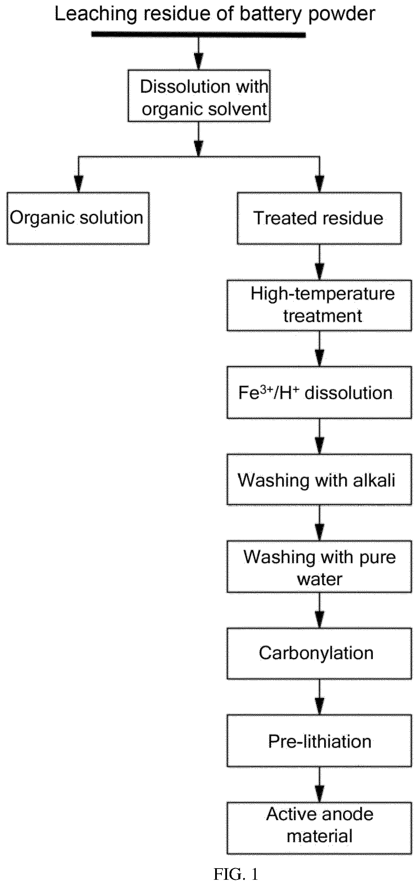

FIG. 1 is a process flow diagram of Example 1 of the present disclosure.

### DETAILED DESCRIPTION OF EMBODIMENTS

The concepts and technical effects of the present disclosure are clearly and completely described below in conjunction with examples, so as to allow the objectives, features and effects of the present disclosure to be fully understood. Apparently, the described examples are merely some rather than all of the examples of the present disclosure. All other examples obtained by those skilled in the art based on the examples of the present disclosure without creative efforts should fall within the protection scope of the present disclosure.

### Example 1

A method for preparing an active anode material by recycling a leaching residue of battery powder was provided, and as shown in FIG. 1, a specific process was as follows:
100 g of the leaching residue of battery powder was collected and tested, and impurity element contents thereof were shown in Table 1.

**Table 1**

| Element | Ni | Co | Mn | Fe | Cu | Na | P | Al | S |
|---|---|---|---|---|---|---|---|---|---|
| ppm | 1009 | 4363 | 601 | 435 | 88 | 5488 | 1515 | 398 | 71860 |

The active anode material was prepared through the following steps:
(1) The collected leaching residue of ternary battery powder was dissolved with NMP to remove a residual electrolytic solution and a binder, and SLS was conducted to obtain an organic solution and a treated residue.
(2) The treated residue was subjected to a reaction at 600 °C for 0.5 h under an oxygen-isolated condition, then soaked for 4.0 h in 500 mL of a mixed solution of 0.05 mol/L ferric sulfate and 0.05 mol/L sulfuric acid, washed first with a sodium hydroxide solution having a concentration of 0.5 mol/L at 80 °C and then with pure water at 90 °C, and placed in a closed container at 190 °C to 210 °C; carbon monoxide was introduced into the closed container to conduct carbonylation for 1.0 h at a pressure of no less than 20 MPa; the temperature was reduced and the pressure was released to conduct carbonylation for 1.0 h at a temperature of 38 °C and a pressure of no less than 0.1 MPa; and after the reaction was completed, benzene was added to soak for 1.0 h, and SLS was conducted to obtain a graphite powder.
(3) The graphite powder was mixed with a lithium powder and then added to NMP, a resulting mixture was stirred at 70 °C to 80 °C for 4.0 h and then subjected to SLS, and a resulting product was dried to obtain the active anode material.

Impurity element contents in the active anode material were tested and shown in Table 2.

**Table 2**

| Element | Ni | Co | Mn | Fe | Cu | Na | P | Al | S |
|---|---|---|---|---|---|---|---|---|---|
| ppm | 18 | 23 | 15 | 63 | ND | 103 | ND | ND | 560 |

### Example 2

A method for preparing an active anode material by recycling a leaching residue of battery powder was provided, and a specific process was as follows:
100 g of the leaching residue of battery powder was collected and tested, and impurity element contents thereof were shown in Table 3.

**Table 3**

| Element | Ni | Co | Mn | Fe | Cu | Na | P | Al | S |
|---|---|---|---|---|---|---|---|---|---|
| ppm | 1235 | 4103 | 586 | 501 | 76 | 5956 | 1233 | 263 | 80352 |

The active anode material was prepared through the following steps:
(1) The collected leaching residue of ternary battery powder was dissolved with DMAC to remove a residual electrolytic solution and a binder, and SLS was conducted to obtain an organic solution and a treated residue.
(2) The treated residue was subjected to a reaction at 300 °C for 2.0 h under an oxygen-isolated condition, then soaked for 4.0 h in 100 mL of a mixed solution of 0.25 mol/L ferric sulfate and 2.0 mol/L sulfuric acid, washed first with a sodium hydroxide solution having a concentration of 0.5 mol/L at 45 °C and then with pure water at 50 °C, and placed in a closed container at 190 °C to 210 °C; carbon monoxide was introduced into the closed container to conduct carbonylation for 0.5 h at a pressure of no less than 20 MPa; the temperature was reduced and the pressure was released to conduct carbonylation for 0.5 h at a temperature of 93 °C and a pressure of no less than 0.1 MPa; and after the reaction was completed, acetone was added to soak for 0.5 h, and SLS was conducted to obtain a graphite powder.
(3) The graphite powder was mixed with a lithium powder and then added to NMP, a resulting mixture was stirred at 70 °C to 80 °C for 1.0 h and then subjected to SLS, and a resulting product was dried to obtain the active anode material.

Impurity element contents in the active anode material were tested and shown in Table 4.

**Table 4**

| Element | Ni | Co | Mn | Fe | Cu | Na | P | Al | S |
|---|---|---|---|---|---|---|---|---|---|
| ppm | 56 | 53 | 62 | 87 | ND | 162 | ND | ND | 732 |

### Example 3

A method for preparing an active anode material by recycling a leaching residue of battery powder was provided, and a specific process was as follows:
100 g of the leaching residue of battery powder was collected and tested, and impurity element contents thereof were shown in Table 5.

**Table 5**

| Element | Ni | Co | Mn | Fe | Cu | Na | P | Al | S |
|---|---|---|---|---|---|---|---|---|---|
| ppm | 837 | 3266 | 452 | 232 | 97 | 4600 | 1718 | 463 | 61735 |

The active anode material was prepared through the following steps:
(1) The collected leaching residue of ternary battery powder was dissolved with PC to remove a residual electrolytic solution and a binder, and SLS was conducted to obtain an organic solution and a treated residue.
(2) The treated residue was subjected to a reaction at 500 °C for 1.0 h under an oxygen-isolated condition, then soaked for 2.0 h in 300 mL of a mixed solution of 0.1 mol/L ferric sulfate and 0.1 mol/L sulfuric acid, washed first with a sodium hydroxide solution having a concentration of 1 mol/L at 60 °C and then with pure water at 70 °C, and placed in a closed container at 190 °C to 210 °C; carbon monoxide was introduced into the closed container to conduct carbonylation for 1.0 h at a pressure of no less than 20 MPa; the temperature was reduced and the pressure was released to conduct carbonylation for 1.0 h at a temperature of 50 °C and a pressure of no less than 0.1 MPa; and after the reaction was completed, diethyl ether was added to soak for 1.0 h, and SLS was conducted to obtain a graphite powder.
(3) The graphite powder was mixed with a lithium powder and then added to NMP, a resulting mixture was stirred at 70 °C to 80 °C for 2.0 h and then subjected to SLS, and a resulting product was dried to obtain the active anode material.

Impurity element contents in the active anode material were tested and shown in Table 6.

**Table 6**

| Element | Ni | Co | Mn | Fe | Cu | Na | P | Al | S |
|---|---|---|---|---|---|---|---|---|---|
| ppm | 21 | 19 | 17 | 71 | ND | 90 | ND | ND | 892 |

The present disclosure is described in detail with reference to the accompanying drawings and examples, but the present disclosure is not limited to the above examples. Within the scope of knowledge possessed by those of ordinary skill in the technical field, various changes can also be made without departing from the purpose of the present disclosure. In addition, the examples in the present disclosure or features in the examples may be combined with each other in a non-conflicting situation.

## Claims

1. A method for preparing an active anode material by recycling a leaching residue of battery powder, comprising the following steps:
S1: soaking the leaching residue of battery powder in a first organic solvent to remove organic impurities, and conducting solid-liquid separation to obtain a treated residue;
S2: subjecting the treated residue to high-temperature treatment under an oxygen-isolated condition, soaking a resulting residue subjected to high-temperature treatment in a mixed solution of a ferric salt and an acid, followed by alkali washing to obtain a residue subjected to alkali washing, and subjecting the residue subjected to alkali washing to a carbonylation reaction with carbon monoxide and then purification with a second organic solvent; and conducting solid-liquid separation to obtain a graphite powder; and
S3: subjecting the graphite powder to pre-lithiation to obtain the active anode material.

2. The method according to claim 1, wherein in step S1, the first organic solvent is at least one selected from the group consisting of N-methylpyrrolidone, N,N-dimethylacetamide, propylene carbonate, 1,3-dioxolane, dimethyl carbonate, and ethyl methyl carbonate.

3. The method according to claim 1, wherein in step S2, the high-temperature treatment is conducted at 300 °C to 600 °C for 0.5 h to 2.0 h.

4. The method according to claim 1, wherein in step S2, the mixed solution is a mixed solution of ferric sulfate and sulfuric acid.

5. The method according to claim 1, wherein in step S2, the mixed solution has a concentration of ferric ions of 0.1 mol/L to 0.5 mol/L and a concentration of hydrogen ions of 0.1 mol/L to 4.0 mol/L; and preferably, a solid-to-liquid ratio of the treated residue to the mixed solution of a ferric salt and an acid is 1 g: (1-5) mL.

6. The method according to claim 1, wherein in step S2, the alkali washing is conducted with a sodium hydroxide solution having a concentration of 0.5 mol/L to 2.0 mol/L at a temperature of 45 °C to 80 °C.

7. The method according to claim 1, wherein in step S2, the carbonylation reaction is conducted in two stages,
wherein a first-stage carbonylation is conducted at a temperature of 190 °C to 210 °C and a pressure of no less than 20 MPa, and preferably, the first-stage carbonylation is conducted for 0.5 h to 1.0 h; and a second-stage carbonylation is conducted at a temperature of 38 °C to 93 °C and a pressure of no less than 0.1 MPa, and preferably, the second-stage carbonylation is conducted for 0.5 h to 1.0 h.

8. The method according to claim 7, wherein in step S2, the second organic solvent is at least one selected from the group consisting of benzene, acetone, diethyl ether, tetrachloronaphthalene, ethanol, trichloromethane, and carbon tetrachloride.

9. The method according to claim 1, wherein in step S3, the pre-lithiation comprises: mixing the graphite powder with a lithium powder and N-methylpyrrolidone, and heating and stirring a resulting mixture; and subjecting the mixture to a solid-liquid separation to obtain a filter residue, and drying the filter residue to obtain the active anode material.

10. The method according to claim 9, wherein in step S3, the heating is conducted at 70 °C to 80 °C, and the stirring is conducted for 1.0 h to 4.0 h.
